# EUROPEAN PATENT APPLICATION

(11) **EP 2 311 553 A1**
(43) Date of publication of application: **20.04.2011**
(21) Application number: 09804828.3
(22) Date of filing: 26.06.2009
(51) Int. Cl.: B01J 2/16, F26B 17/10

(54) **FLUID LAYER DEVICE**

(30) Priority: 05.08.2008 JP 2008202232
(71) Applicant: Freund Corporation, Tokyo 169-0072 (JP); Okawara Mfg. Co., Ltd., Shizuoka 421-0304 (JP)
(72) Inventor: FUSEJIMA Iwao, Tokyo 163-6034 (JP); NARA Kazuhiko, Tokyo 163-6034 (JP); OMORI Masayuki, Yaizu-shi Shizuoka 421-0212 (JP)
(74) Representative: Spilgies, Jan-Hendrik
(86) International application number: PCT/JP2009/061696
(87) International publication number: WO 2010/016341

(57) **Abstract**

A fluidized bed apparatus (1) includes: a filter casing unit (5) attached to a support base (3) so as to be vertically movable; and a spray casing unit (6) attached to the support base (3) so as to be swingingly movable. The filter casing unit (5) is, while being inverted, vertically moved under a state in which the spray casing unit (6) is withdrawn sideways, and a filter is replaced at a maintenance position (Y) on a lower side of the apparatus. The filter casing unit (5) is attached to a base plate (34) of a lifting device (13). When a lift plate (41) ascends while being placed on a screw nut (39), the filter casing unit (5) also ascends. The filter casing unit (5) is not fixed to the lifting device (13) and is not distorted even when the unit cannot be sandwiched with an equal force.

## Description

### Technical Field

The present invention relates to a fluidized bed apparatus used for granulation, coating, and the like of powder and particle, and more particularly, to a lifting mechanism of a filter casing in which a dust collection filter is accommodated.

### Background Art

In granulation and coating with use of a fluidized bed granulation coating apparatus, powder dust and the air are separated from each other by a filter so that the powder dust generated during processes is not discharged to an outside of the fluid bed. Bag filters and cartridge filters are used as the filter in many cases. In recent years, in terms of filtering efficiency and cleaning properties, use of the cartridge filter has increased. The cartridge filter is supportedly fixed to a top plate installed at an upper end portion of a filter casing, and is arranged in a manner of being suspended from the top plate into the casing. The cartridge filter is replaced or cleaned under a state in which the filter is separated and lowered together with a support top plate from the filter casing, and then the filter is lowered to a lower portion in the apparatus.

Further, for facilitation of replacement and cleaning of the filter, there has been also proposed an apparatus in which the filter casing is rotatably arranged with respect to a support member. For example, in the apparatus disclosed in Patent Document 1, the filter casing is rotatable with respect to support members attached to risers, and is set under a state of being sandwiched between a cover of an air exhaust chamber on an upper side and a basket in which particulate materials are accommodated on a lower side. The filter casing is rotatably supported with respect to the support members by side-portion pillars. In this apparatus, when the filter is replaced and cleaned after a granulation process, the filter casing is inverted upside down and lowered. Inversion and lowering of the filter casing as described above causes the filter attached to the upper end portion of the casing to be lowered to a position at which work is easily performed, and enables work such as filter replacement to be performed.
Patent Document 1: JP 3464222 B

### Disclosure of the Invention

### Problems to be solved by the Invention

Meanwhile, in the conventional fluidized bed apparatus as described above, the filter casing is sandwiched by lowering of the cover of the air exhaust chamber and raising of the basket positioned in the lower portion of the filter casing. That is, the filter casing is set in a manner of being sandwiched between the upper and lower casings and the like, and receives a sandwiching force from the upper and lower members. However, the filter casing is a considerably-heavy large case, and hence it is difficult to set the casing to a position of being sandwiched with an equal force from above and below.
Thus, the filter casing cannot be sandwiched between the upper and lower casings with an equal force, and may be distorted in some cases.

In this case, in structure in which the filter casing is fixed to the support members and the like, the filter casing in a sandwiched state has little room for moving in an upper-and-lower direction. Once the distortion occurs, there is no place for the generated distortion to be released. Thus, there is a problem in that, at the time of setting of the apparatus, portions in the apparatus, such as a rotation mechanism and a raising and lowering mechanism, may be damaged. Meanwhile, in order to accurately control the movement of the filter casing so as to prevent generation of such distortion, delicate mechanisms and sensors have to be provided. As a result, the apparatus becomes larger and more complicated, and the price of the apparatus becomes markedly higher.

It is an object of the present invention to provide a fluidized bed apparatus including a filter casing in which dust collection filters are accommodated and which is arranged so as to be capable of ascending and descending, the fluidized bed apparatus reducing distortion generated in the casing at the time of setting of the filter casing, and suppressing damage to the apparatus.

### Means for solving the Problems

The fluidized bed apparatus According to the present invention includes: a spray casing unit in which a spray device for spraying liquid to an object of processing is arranged; a filter casing unit in which a filter for processing-gas filtration is arranged; and a support base for supporting the spray casing unit and the filter casing unit, in which: the spray casing unit is attached to the support base so as to be swingingly movable in a horizontal direction; and the filter casing unit is attached to the support base so as to be vertically movable while being supported in a cantilever manner, and is vertically movable by swing movement of the spray casing unit in the horizontal direction.

According to the present invention, the spray casing unit and the filter casing unit are formed separately from each other, and hence the filter casing unit is downsized and weight-reduced so as to be supported in a cantilever manner. Thus, side-surface pillars for supporting the filter casing from both sides thereof are unnecessary. In addition, the spray casing can be swingingly moved in the horizontal direction, and the filter casing is capable of ascending and descending.

In the fluidized bed apparatus, the filter casing unit may be installed so as to be vertically movable by a lifting mechanism attached to the support base, the lifting mechanism including: a bracket guide attached to a lifting guide shaft extending in an upper-and-lower direction so as to be vertically movable, the bracket guide including a support shaft to which the filter casing unit is fixed to one end side thereof; a ball screw shaft arranged in parallel with the lifting guide shaft; a screw nut which is attached to the ball screw shaft and moves in the upper-and-lower direction in accordance with rotation of the ball screw shaft; and an engagement piece which is provided to the bracket guide and comes into contact with an upper end portion of the screw nut, the engagement piece being supported by the screw nut so as to be movable in the upper-and-lower direction.

With this, engagement of the screw nut and the engagement piece causes the filter casing unit to ascend. Then, stopping of the filter casing below a predetermined setting position enables the filter casing to be set to the setting position in a free state in the upper-and-lower direction.
Thus, the filter casing can be easily sandwiched with an equal force. Even when the filter casing cannot be sandwiched with an equal force, the filter casing is not distorted or the lifting mechanism is not damaged.

Further, the support shaft may be rotatably attached to the bracket guide and may be drivingly rotated by a motor attached to another end side thereof. With this, the filter casing unit can be moved in the upper-and-lower direction while being rotated.

### Effects of the Invention

According to the fluidized bed apparatus of the present invention, the spray casing unit and the filter casing unit are supported by the support base in the fluidized bed apparatus. The spray casing unit is attached to the support base so as to be swingingly movable in the horizontal direction. In addition, the filter casing unit is attached to the support base so as to be vertically movable while being supported in a cantilever manner, and is movable in the upper-and-lower direction by swing movement of the spray casing unit in the horizontal direction. Thus, the filter casing unit, which is formed separately from the spray casing unit, is downsized and weight-reduced, with the result that the filter casing unit can be supported in a cantilever manner. Accordingly, the side-surface pillars for supporting the filter casing from both the sides thereof are unnecessary. In addition, the spray casing can be swingingly moved in the horizontal direction, and the filter casing is capable of ascending and descending. Thus, maintenance of the filter can be performed at a low position, and hence workability is markedly improved in comparison with work at a high position.

Further, the filter casing unit is installed so as to be vertically movable by the lifting mechanism attached to the support base, and engagement of the screw nut and the engagement piece of the lifting mechanism causes the filter casing unit to ascend. Thus, stopping of the filter casing below a predetermined setting position enables the filter casing to be set to the setting position in the free state in the upper-and-lower direction. Consequently, the filter casing can be easily sandwiched with an equal force. Even when the filter casing cannot be sandwiched with an equal force, the filter casing can be prevented from being distorted, and the lifting mechanism can be prevented from being damaged. As a result, a service life of the apparatus can be prolonged.

### Brief Description of the Drawings

[FIG. 1] A front view of an external appearance of a fluidized bed apparatus according to an embodiment of the present invention.
[FIG. 2] A side view of the fluidize bed apparatus of FIG. 1.
[FIG. 3] Explanatory diagrams illustrating a process of maintenance work on a cartridge filter.
[FIG. 4] An explanatory diagram illustrating a state in which a lifting mechanism is incorporated in a support base of the fluidized bed apparatus.
[FIG. 5] A front view of the lifting mechanism.
[FIG. 6] An explanatory diagram of a main-part structure of the lifting mechanism.

### Description of Symbols

| | | | |
|---|---|---|---|
| 1 | fluidized bed apparatus | 2 | processing vessel |
| 3 | support base | 4 | cover unit |
| 5 | filter casing | 6 | spray casing |
| 7 | raw-material-vessel container | 8 | air supply unit |
| 11 | cover bracket | 12 | air exhaust port |
| 13 | lifting mechanism | 14 | top plate |
| 15 | cartridge filter | 16 | filter member |
| 17 | retainer | 18 | end cap |
| 19 | filter-fixing knob | 21 | spray nozzle |
| 22 | swing bracket | 23 | fluidizing chamber |
| 24 | carriage | | |
| 25 | raw-material storage chamber | | |
| 26 | perforated plate | 27 | air supply chamber |
| 28 | air supply duct | 31 | attachment frame |
| 32 | lifting guide shaft | 33 | bracket guide |
| 34 | base plate | 35 | motor |
| 36 | rotation support shaft | 37 | ball screw shaft |
| 38 | motor | 39 | screw nut |
| 41 | lift plate (engagement piece) | X | setting position |
| Y | maintenance position | | |

### Best Mode for carrying out the Invention

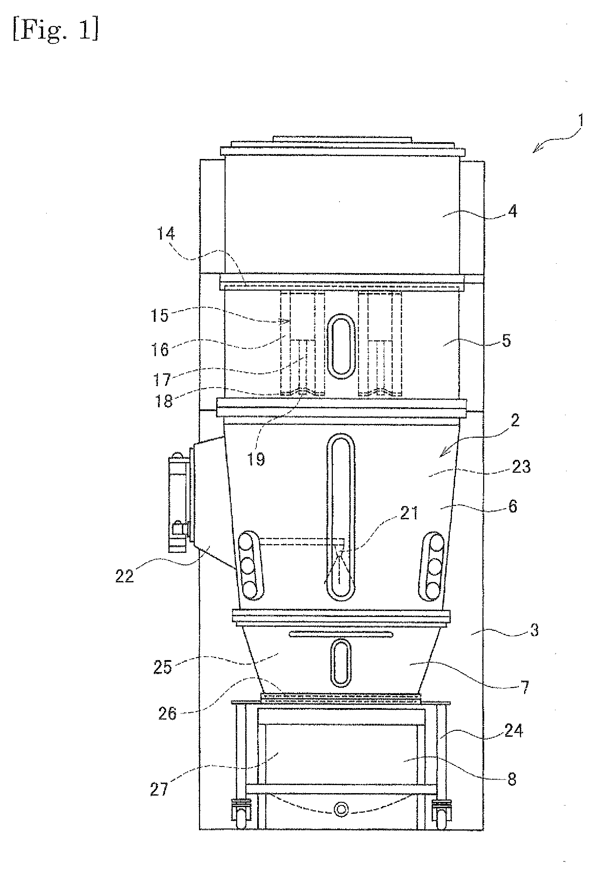

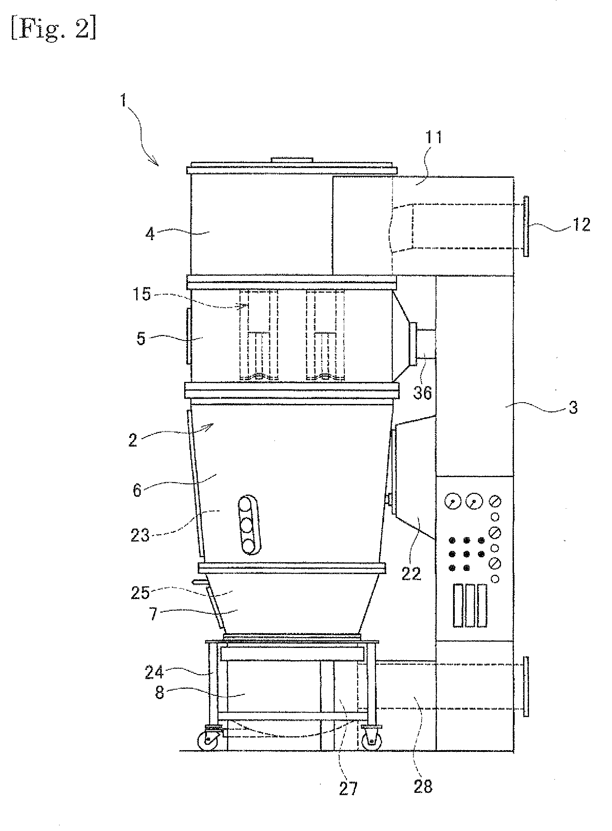

In the following, detailed description is made of an embodiment of the present invention with reference to the figures. FIG. 1 is a front view of an external appearance of a fluidized bed apparatus according to the embodiment of the present invention, and FIG. 2 is a side view of the fluidized bed apparatus of FIG. 1. A fluidized bed apparatus 1 is used for manufacture of granular medicine, food, and the like. In the apparatus, a binder liquid and a coating liquid are sprayed to particulate materials fluidized by a processing gas.

The fluidized bed apparatus 1 is provided with a cylindrical processing vessel 2 in which particulate materials as raw materials are stored and undergo a desired granulation-coating process and the like. The processing vessel 2 is made of stainless steel, and as illustrated in FIGS. 1 and 2, is supported by a support base 3. In the processing vessel 2 of the fluidized bed apparatus 1, a cover unit 4, a filter casing 5, a spray casing 6, a raw-material-vessel container 7, and an air supply unit 8 are arranged in state order from above in a superimposed manner. At the time of granular-solid processing, the units, for example, the cover unit 4 and the filter casing 5 are fastened to each other in an airtight manner by ring-like sealing members.

The cover unit 4 is fixedly supported with respect to the support base 3 by a cover bracket 11. An upper surface of the cover unit 4 is provided with an air exhaust port 12. An air exhaust duct (not shown) is connected to the air exhaust port 12. The filter casing 5 formed separately from the spray casing 6 is attached onto a lower surface side of the cover unit 4. In the fluidized bed apparatus 1, the filter casing 5 is separated from the spray casing 6. Thus, in comparison with fluidized bed apparatuses in which both the casings are formed integrally with each other, the filter casing 5 is downsized and weight-reduced. The filter casing 5 is provided so as to be movable in an upper-and-lower direction by a lifting mechanism 13 incorporated in the support base 3. A disk-like top plate 14 is fixed to an upper end portion of the filter casing 5. Cartridge filters 15 are attached to the top plate 14. In the fluidized bed apparatus 1, the top plate 14 is fixed by welding to an inner periphery of the filter casing 5 without any space therebetween so that powder does not escape from between the casing and the top plate.

A filter member 16 made of polyester nonwoven fabric is used for the cartridge filters 15 of the fluidized bed apparatus 1. A stainless retainer 17 is inserted at a center of the filter member 16. The retainer 17 has an upper end fixed to the top plate 14 and a lower end to which an end cap 18 and a filter-fixing knob 19 are attached. Through fastening the filter-fixing knob 19, the filter member 16 is fixed to the top plate 14 while being guided by the retainer 17.

In the spray casing 6, there are provided a spray nozzle 21 for spraying a binder liquid and a coating liquid to particulate materials. The spray casing 6 is attached to the support base 3 through intermediation of a swing bracket 22, and is provided so as to be swingingly movable in a horizontal direction. In addition to the swing movement in the horizontal direction, the swing bracket 22 includes a sliding mechanism which enables the spray casing 6 to move upward when a force acts from below on the spray casing 6. Note that, in the fluidized bed apparatus 1, the spray casing 6 is separated from the filter casing 5. Thus, withdrawal of the spray casing 6 in the horizontal direction enables a worker to access the cartridge filters 15 in the filter casing from below. Further, a fluidizing chamber 23 is formed in the spray casing 6, and the spray nozzle 21 is arranged in the fluidizing chamber 23. Through tubes (not shown), a binder liquid and a coating liquid are supplied from a pump provided outside the apparatus to the spray nozzle 21.

The raw-material-vessel container 7 is arranged below the spray casing 6. Particulate materials as objects of processing are put into the raw-material-vessel container 7. The raw-material-vessel container 7 is an inverse truncated conical cylinder reduced in diameter downward. To the raw-material-vessel container 7, a carriage 24 is attached so that the container is freely movable on a floor surface. A raw-material storage chamber 25 is formed in the raw-material-vessel container 7. An air-permeable perforated plate 26 is provided in a lower portion of the raw-material-vessel container 7, that is, a bottom portion of the raw-material storage chamber 25. Particulate materials put into the raw-material storage chamber 25 are supported on the perforated plate 26.

The air supply unit 8 having an air supply chamber 27 therein is installed below the raw-material-vessel container 7. The air supply unit 8 is connected to an air supply duct 28 communicating to the air supply chamber 27. The air supply duct 28 is connected to an air supply source (not shown) provided outside the apparatus. Into the air supply chamber 27, a processing gas (fluidizing air) for fluidizing particulate materials is supplied through the air supply duct 28.

In the fluidized bed apparatus 1 as described above, when the fluidizing air is supplied from the air supply duct 28 into the air supply chamber 27, the air passes through the perforated plate 26 and flows into the raw-material storage chamber 25. With this, particulate materials in the raw-material storage chamber 25 are blown up and enter a fluidized state in the raw-material storage chamber 25 and the fluidizing chamber 23. In this state, the binder liquid and the coating liquid are appropriately sprayed from the spray nozzle 21. with this, a granulation process and a coating process are performed on the particulate materials. In this case, minute solid particles are removed by the cartridge filters 15 from the gas which causes the particulate materials to enter into the fluidized state. As a result, the gas is purified. After that, the gas having passed through the cartridge filters 15 is discharged to an outside of the apparatus through the air exhaust duct.

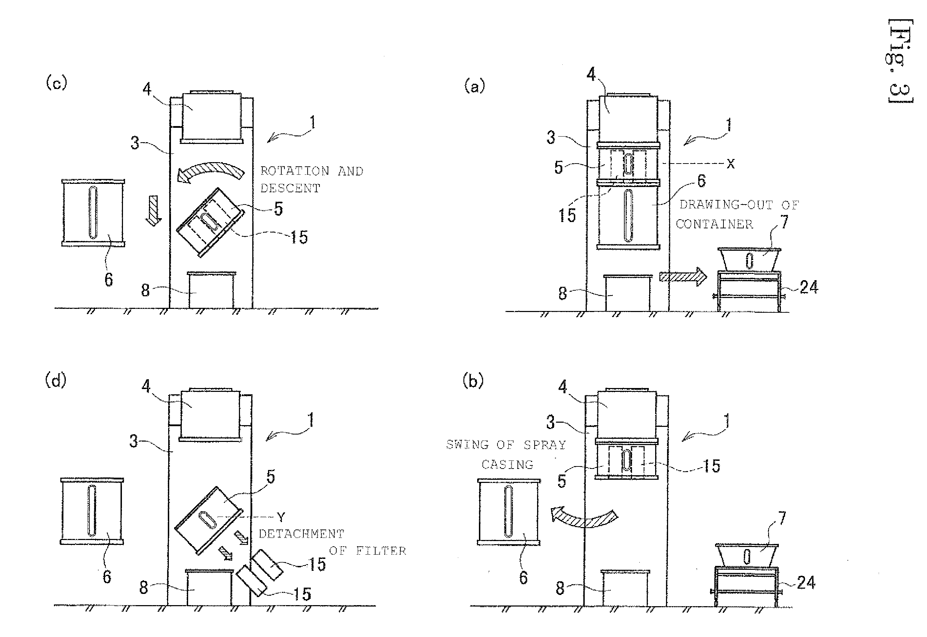

Meanwhile, through repeated granulation-coating processes, minute powder adheres to the filter member 16, with the result that filtering efficiency is deteriorated. Thus, at the time of processes on particulate materials, it is necessary to appropriately replace and clean the cartridge filters 15. FIG. 3 is an explanatory diagram illustrating a process of maintenance work (replacement and cleaning) on the cartridge filters 15. As illustrated in FIG. 3(a), in this case, first, the carriage 24 is moved so that the raw-material-vessel container 7 is drawn to the outside of the apparatus. Next, as illustrated in FIG. 3(b), the spray casing 6 is swung in the horizontal direction so that a space is secured below the filter casing 5. After sideways withdrawal of the spray casing 6, as illustrated in FIGS. 3(c) and 3(d), the filter casing 5 is lowered from a setting position X to a maintenance position Y while being inverted upside down.

In this case, in the fluidized bed apparatus 1, due to downsizing and weight reduction of the filter casing 5, an area required for rotation of the filter casing 5 is saved. As a result, the apparatus is downsized and an installation area therefor is reduced. Further, the filter casing 5 can also be rotated by 360 degrees, and hence a secondary side of the cartridge filters 15 (air exhaust side: upper surface side of the top plate 14 of FIG. 1) can be easily recognized. Further, due to 360-degree rotation of the filter casing 5, at the time of maintenance, tools and the like are prevented from being left on the filter secondary side.

After the filter casing 5 is lowered to the maintenance position Y of FIG. 3(d), the cartridge filters 15 are detached from the filter casing 5 so as to undergo replacement and cleaning. In this manner, when the cartridge filters 15 are inverted and moved to the maintenance position Y on a lower side of the apparatus, and the filters are detached thereat, maintenance of the filter can be performed at a low position. Thus, workability is markedly improved in comparison with work at a high position.

Further, as in the apparatus of Patent Document 1, in structure in which the spray casing 6 and the filter casing 5 are integrated with each other, a large casing is inverted. Thus, an occupation area of the apparatus is increased.
Further, there is a risk that, upon inversion, liquid dripping from the spray nozzle 21 occurs and the liquid adheres to the cartridge filters 15. As a countermeasure, in the fluidized bed apparatus 1, the filter casing 5 is rotated and lowered under a state in which the spray casing 6 is withdrawn sideways. Thus, the spray nozzle 21 is not inverted, and there occurs no problem of liquid dripping.

After replacement and the like of the cartridge filters 15, the cartridge filters 15 are re-attached to the filter casing 5. Next, while being inverted upside down, the filter casing 5 is raised from the maintenance position Y to the setting position X. After the filter casing 5 is installed the predetermined setting position X, the spray casing 6 is swung in the horizontal direction so as to be set to an original predetermined position. After the filter casing 5 and the spray casing 6 are set to predetermined positions, the raw-material-vessel container 7 mounted on the carriage 24 is arranged below the spray casing 6. A lift mechanism (not shown) provided in the air supply unit 8 pushes up the raw-material-vessel container 7 so that the spray casing 6, the filter casing 5, and the cover unit 4 are brought into close contact with each other from below. With this, the processing vessel 2 enters a state of being capable of a fluidization process. Then, the granulation-coating process is performed on the particulate materials through supply of fluidizing air, spray of the coating liquid, and the like.

In this case, also in the fluidized bed apparatus 1, the filter casing 5 is set in a manner of being sandwiched between the cover unit 4 and the spray casing 6. As described above, in the apparatus having such structure, when the filter casing 5 cannot be sandwiched between the upper and lower members with an equal force, there are risks that the filter casing 5 is distorted and that the lifting mechanism 13 and the like are damaged. Under the circumstance, in the fluidized bed apparatus 1 according to the present invention, a mechanism for preventing distortion and damage is added between the lifting mechanism 13 and the filter casing 5. In this manner, a service life of the apparatus is prolonged.

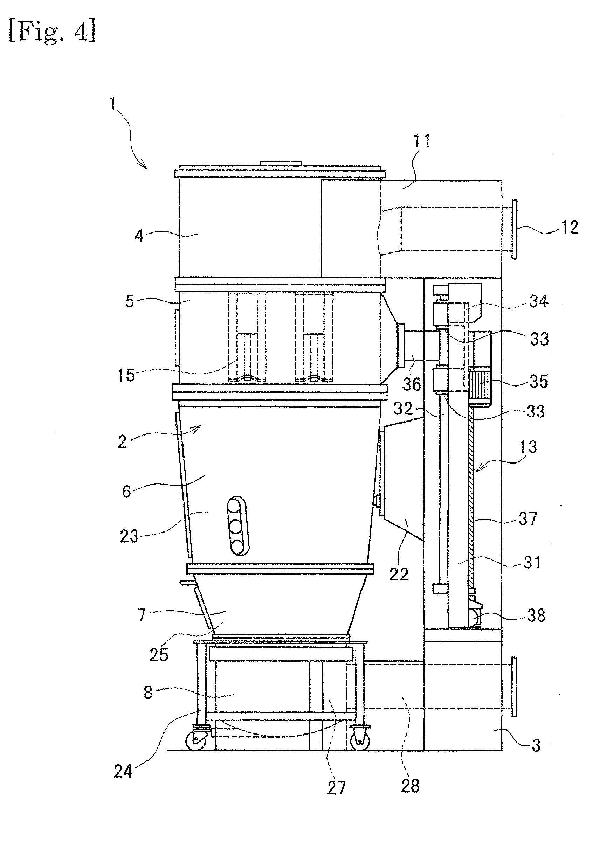

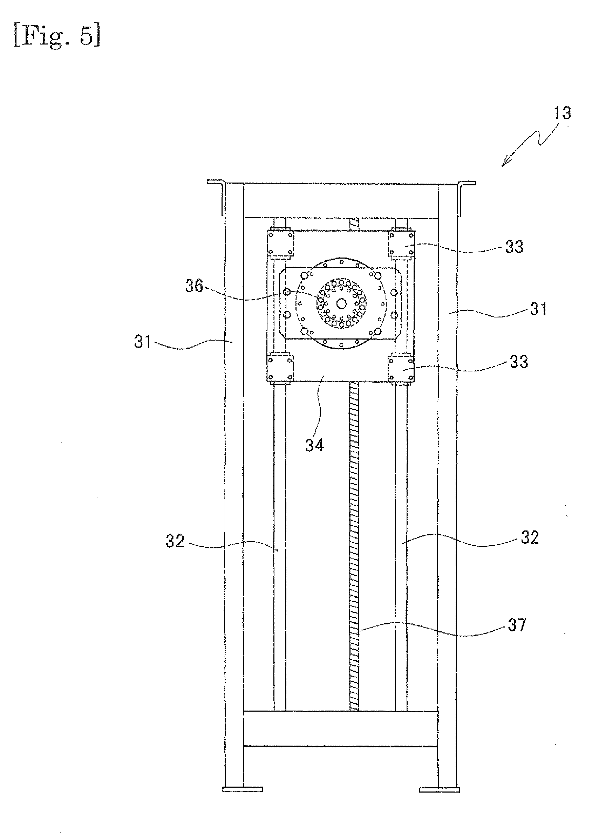

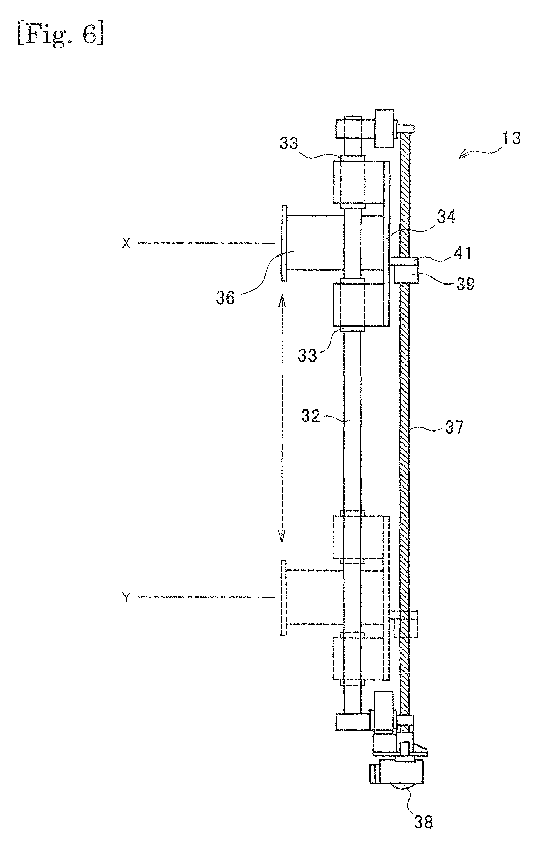

FIG. 4 is an explanatory diagram illustrating a state in which the lifting mechanism 13 is incorporated in the support base 3 of the fluidized bed apparatus 1. FIG. 5 is a front view of the lifting mechanism 13. FIG. 6 is an explanatory diagram of a main-part structure of the lifting mechanism 13. As illustrated in FIG. 4, the lifting mechanism 13 is accommodated in the support base 3, and is fixed to the support base 3 by attachment frames 31. The lifting mechanism 13 is provided with two lifting guide shafts 32. Through intermediation of bracket guides 33, a base plate 34 is attached to the lifting guide shafts 32 so as to be freely vertically movable. A rotation support shaft 36 is rotatably attached to the base plate 34. The filter casing 5 is attached to one end side of the rotation support shaft 36. That is, the filter casing 5 is supported from behind by the lifting mechanism 13 in a cantilever manner. Another end side of the rotation support shaft 36 is connected to a motor 35 attached to the base plate 34. When the motor is activated, the filter casing 5 is rotated about the rotation support shaft 36.

As described above, in the fluidized bed apparatus 1, the filter casing 5 is downsized and weight-reduced, and hence the filter casing 5 can be supported from a rear surface thereof in a cantilever manner. Thus, side-surface pillars for supporting the filter casing 5 from both sides thereof are unnecessary. In addition, the spray casing 6 can be swingingly moved, and the filter casing 5 is capable of ascending and descending. Further, as illustrated in FIG. 3, support of the filter casing 5 in a cantilever manner from behind enables rotation of the filter casing 5 in a lateral direction when viewed from a front of the apparatus.

The lifting mechanism 13 is also provided with a ball screw shaft 37 in parallel with the lifting guide shafts 32. The ball screw shaft 37 is installed so as to extend in the upper-and-lower direction, and drivingly rotated by a motor 38 provided in a lower portion of the lifting mechanism 13. A screw nut 39 is attached to the ball screw shaft 37. When the ball screw shaft 37 is rotated by the motor 38, the screw nut 39 moves in the upper-and-lower direction in accordance therewith. In accordance with a rotation angle of the ball screw shaft 37, the screw nut 39 is capable of ascending and descending, and can be stopped to any position in the upper-and-lower direction. Meanwhile, a lift plate (engagement piece) 41 is projectingly provided to the base plate 34 so as to come into contact with an upper end portion of the screw nut 39. Fixation is not effected between the lift plate 41 and the screw nut 39, and the screw nut 39 comes into contact with the lift plate 41 from a lower side of the lift plate 41.

In the lifting mechanism 13 as described above, when the screw nut 39 ascend, the lift plate 41 is mounted thereon. Then, the filter casing 5 moves upward together with the screw nut 39. In contrast, when the screw nut 39 descends, self-weight of the filter casing 5 lowers the lift plate 41 in a manner of following the screw nut 39, and the filter casing 5 also moves downward. Note that, in a case where the filter casing 5 moves in the upper-and-lower direction, when the motor 35 is activated in conjunction therewith so as to rotate the rotation support shaft 36, as illustrated in FIGS. 3(c) and (d) above, the filter casing 5 moves in the upper-and-lower direction while being inverted upside down.

In this context, in the fluidized bed apparatus 1 of the present invention, the filter casing 5 is arranged at the setting position X as follows. After filter maintenance work and the like, when the fluidized bed apparatus 1 is caused to enter the state of being capable of the fluidization process, the screw nut 39 is raised. In this case, first, the filter casing 5 is stopped somewhat below a predetermined position (setting position X). The spray casing 6 and the raw-material-vessel container 7 are set, with the filter casing 5 being maintained in this state. Then, the lift mechanism (not shown) provided in the air supply unit 8 pushes up the raw-material-vessel container 7 from below. With this, the filter casing 5 is sandwiched between the cover unit 4 and the spray casing 6. Further, the spray casing 6 and the filter casing 5, and the cover unit 4 and the filter casing 5 are held in close contact with each other, with the result that the processing vessel 2 enters the state of being capable of the fluidization process.

At the time of such setting work, the lift plate 41 is merely placed on the screw nut 39, and hence the filter casing 5 is separated from the screw nut 39 when being pushed from below with a force larger than that corresponding to the weight thereof. Thus, the filter casing 5 is pushed up above the above-mentioned position of being stopped by the lifting mechanism 13, and the lift plate 41 is separated upward from the screw nut 39. As a result, both the members enter a non-contact state. That is, under a state in which the filter casing 5 is pushed up to the setting position X so as to be arranged between the cover unit 4 and the spray casing 6, the lifting mechanism 13 and the filter casing 5 enter a state of disconnection.

As described above, in the fluidized bed apparatus 1, the lifting mechanism 13 and the filter casing 5 are not in a fixed state, and the filter casing 5 is moved upward in such a manner that the lift plate 41 is mounted on the screw nut 39. Accordingly, for example, by setting a rising end of the screw nut 39 to somewhat below the setting position X so that the filter casing 5 is stopped below the setting position X, the filter casing 5 can be set to the setting position X in a free state in the upper-and-lower direction.

Thus, unlike the case where the filter casing 5 is fixed to the lifting mechanism, it is unnecessary to stop the filter casing 5 accurately to the setting position X. Further, vertical movement of the filters is not hindered at the time of setting, and hence the filter casing 5 can be easily sandwiched with an equal force. In addition, even when the filter casing 5 cannot be sandwiched with an equal force, the filter casing 5 is not in a state of being fixed to another member. Thus, the filter casing 5 is not distorted. Further, in this case, the filter casing 5 is disconnected from the lifting mechanism 13, and hence the lifting mechanism 13 and the like are not damaged.

The present invention is not limited to the above-mentioned embodiment. As a matter of course, various modifications may be made thereto without departing from the spirit of the present invention.
For example, although the above-mentioned embodiment describes the fluidized bed apparatus for performing a coating process on particulate materials, the present invention is also applicable to an apparatus for granulation and an apparatus for drying particulate materials. Further, the above-mentioned embodiment describes the procedure for replacing and cleaning the filters by lowering the filter casing 5 to the maintenance position. In this context, the lifting mechanism 13 enables the filter casing 5 to be stopped at any height position and rotated at any height. Thus, the stop position and the rotation angle thereof can be arbitrarily changed in accordance with workers, work environment, and the like. Further, although the embodiment describes a method by which the cartridge filters 15 are attached from a lower surface side of the top plate 14, the filter casing 5 can be rotated by 360 degrees. Thus, there may be used cartridge filters which have structure different from that in the above-mentioned embodiment and allow attachment and detachment from the upper surface side of the top plate 14.

## Claims

1. A fluidized bed apparatus, comprising:
a spray casing unit in which a spray device for spraying liquid to an object of processing is arranged;
a filter casing unit in which a filter for processing-gas filtration is arranged; and
a support base for supporting the spray casing unit and the filter casing unit, wherein:
the spray casing unit is attached to the support base so as to be swingingly movable in a horizontal direction; and
the filter casing unit is attached to the support base so as to be vertically movable while being supported in a cantilever manner, and is vertically movable by swing movement of the spray casing unit in the horizontal direction.

2. A fluidized bed apparatus according to claim 1,
wherein the filter casing unit is installed so as to be vertically movable by a lifting mechanism attached to the support base, the lifting mechanism comprising:
a bracket guide attached to a lifting guide shaft extending in an upper-and-lower direction so as to be vertically movable, the bracket guide comprising a support shaft to which the filter casing unit is fixed to one end side thereof;
a ball screw shaft arranged in parallel with the lifting guide shaft;
a screw nut which is attached to the ball screw shaft and moves in the upper-and-lower direction in accordance with rotation of the ball screw shaft; and
an engagement piece which is provided to the bracket guide and comes into contact with an upper end portion of the screw nut, the engagement piece being supported by the screw nut so as to be movable in the upper-and-lower direction.

3. A fluidized bed apparatus according to claim 1 or 2, wherein the support shaft is rotatably attached to the bracket guide and is drivingly rotated by a motor attached to another end side thereof.
